# EUROPEAN PATENT SPECIFICATION

(11) **EP 4 443 600 B1**
(45) Date of publication and mention of the grant of the patent: **11.11.2026**
(21) Application number: 23868615.8
(22) Date of filing: 21.09.2023
(51) Int. Cl.: H01M 10/48, H01M 50/569, H01M 10/42, G01M 3/40, H01M 50/211

(54) **BATTERY MODULE WITH ELECTROLYTE DETECTION UNIT AND METHOD USING THE SAME**
BATTERIEMODUL MIT ELEKTROLYT-DETEKTIONSEINHEIT UND VERFAHREM DAMIT
BLOC-BATTERIE AVEC UNITÉ DE DÉTECTION DE FUITE D'ÉLECTROLYTE ET PROCEDE LE COMPRENANT

(30) Priority: 22.09.2022 KR 20220120201
(43) Date of publication of application: 09.10.2024
(73) Proprietor: LG Energy Solution, Ltd., Seoul 07335 (KR)
(72) Inventor: OH, Kyu Hwan, Daejeon 34122 (KR); LEE, Won Tae, Daejeon 34122 (KR); HWANG, Sung Tack, Daejeon 34122 (KR)
(74) Representative: Plasseraud IP
(86) International application number: PCT/KR2023/014393
(87) International publication number: WO 2024/063563

(56) References cited:
- EP-A1- 3 716 352
- EP-A1- 4 224 596
- JP-A- 2000 260 402
- JP-A- 2010 055 973
- JP-A- 2019 149 306
- JP-A- 2021 093 284
- KR-A- 20210 108 269
- KR-A- 20210 155 526
- KR-U- 19980 021 898

## Description

### [Technical Field]

The present invention relates to an electrolyte leakage detection unit and a battery module including the same. More particularly, the present invention relates to a detection unit disposed in a battery module, the detection unit being configured tc detect leakage of an electrolyte from a battery cell, and a battery module including the detection unit. The invention also relates to a method of detecting leakage of an electrolyte from a battery cell using the battery module.

### [Background Art]

A secondary battery is constituted by a battery module including a plurality of battery cells connected to each other in series and/or in parallel or a battery pack including battery modules connected to each other depending on required output voltage or charge and discharge capacities.

A pouch-shaped battery having a stacked type or stacked and folded type electrode assembly mounted in a pouch-shaped battery case made of a laminate sheet has been mainly used in a battery module or a battery pack due to low manufacturing cost and high energy density thereof.

For the pouch-shaped battery, a laminate sheet including an outer covering layer, a metal barrier layer, and an inner adhesive layer is shaped so as to be used as a battery case. An electrode assembly and an electrolyte are received in a receiving portion formed in the laminate sheet, and the laminate sheet is sealed, whereby the pouch-shaped battery is manufactured.

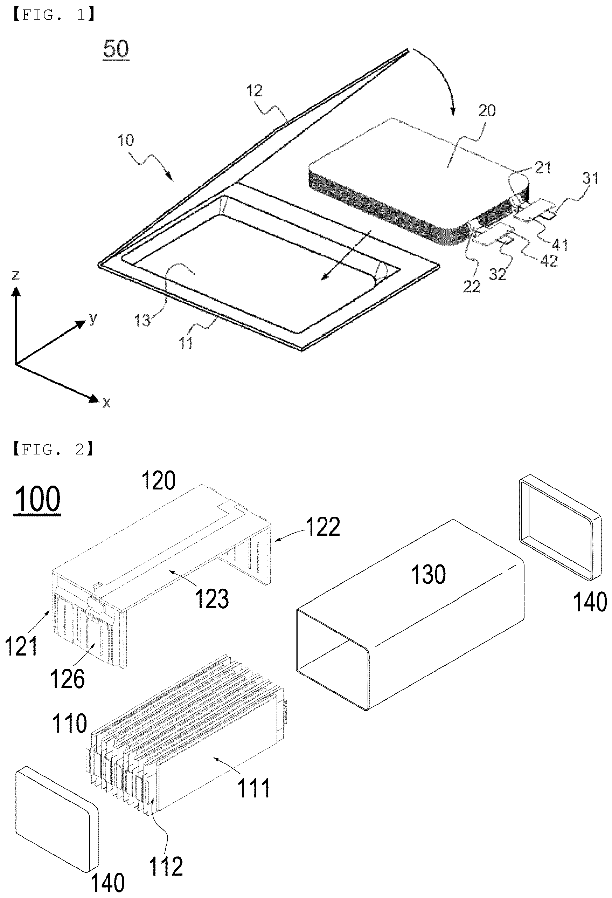

As shown in FIG. 1, a pouch-shaped battery 50 is configured such that an electrode assembly 20 is mounted in a receiving portion 13 of a battery case 10 constituted by a pouch-shaped lower part 11 and a pouch-shaped upper part 12. Positive electrode and negative electrode tabs 21 and 22 of the electrode assembly 20 are welded respectively to two electrode leads 31 and 32, which are exposed out of the battery case 10. An outer periphery of the battery case 10 is sealed in the state in which a pair of insulating films 41 is provided on upper and lower surfaces of the electrode lead 31 and a pair of insulating films 42 is provided on upper and lower surfaces of the electrode lead 32.

FIG. 1 shows the case in which the positive electrode and negative electrode tabs 21 and 22 are located in the same direction by way of example. That is, in FIG. 1, the positive electrode and negative electrode tabs 21 and 22 are located only in a +x direction of a plane parallel to a yz plane of the electrode assembly 20. When the positive electrode and negative electrode tabs 21 and 22 are located in different directions of the electrode assembly 20, i.e., when the positive electrode and negative electrode tabs are located respectively in +x and -x directions of the plane parallel to the yz-plane of the electrode assembly 20 in FIG. 1, a folded edge of the battery case, i.e., a folded edge located along a y-axis in FIG. 1, is rotated in a counterclockwise direction and is located in a plane located along an x-axis.

A pouch-shaped battery configured such that electrode tabs are located at opposite sides of an electrode assembly is mainly used in a battery module or a battery pack. A plurality of pouch-shaped batteries, in each of which a positive electrode tab and a negative electrode tab are provided respectively at opposite sides thereof, is vertically disposed to constitute a battery cell assembly, and busbars configured to electrically connect the positive electrode tabs and the negative electrode tabs, specifically positive electrode leads and the negative electrode leads, to each other are disposed at opposite ends of the battery cell assembly. The busbars disposed at the opposite ends of the battery cell assembly may be electrically connected to each other.

FIG. 2 is an exploded perspective view schematically showing the structure of a conventional battery module 100. Referring to FIG. 2, the battery module 100 includes a battery cell assembly 110 constituted by a stack of battery cells 111, each of which has bidirectional electrode leads 112, a busbar frame 120 constituted by a first vertical plate 121 and a second vertical plate 122 disposed respectively at opposite side surfaces of the battery cell assembly 110 so as to correspond to the position of the electrode leads 112 of the battery cells 111 and an upper plate 123 connected to the first vertical plate 121 and the second vertical plate 122, the upper plate being disposed above the battery cell assembly 110, and a monoframe 130 formed in the shape of a square pipe, into an inner space of which the battery cell assembly 110 having the busbar frame 120 mounted thereto is inserted. A side frame 140 is then coupled to the monoframe 130, whereby the battery module 100 is completed.

A busbar 126 is disposed at each of the first vertical plate 121 and the second vertical plate 122. The busbar 126 is configured to connect the plurality of battery cells 111 to each other in series or in parallel. The busbar 126 is a conductor having low impedance and high current capacity, and a plurality of busbars 126 is disposed side by side in a direction in which the plurality of battery cells 111 is stacked to connect the battery cells 111 to each other in series or in parallel.

Although the busbar 126 is shown as a plate structure having a uniform thickness by way of example, the present invention is not limited thereto, and change to various structures capable of achieving electrical connection is possible.

In addition to the pouch-shaped battery, a cylindrical battery or a prismatic battery may also constitute a battery module or a battery pack. A plurality of cylindrical batteries or a plurality of prismatic batteries may be vertically disposed, and a busbar may be disposed at upper surfaces and/or lower surfaces of the batteries at which electrodes are disposed.

After the battery cells and the busbar are connected to each other, a case configured to fix the battery cells and the busbar may be separately added to the outside.

When each of the pouch-shaped battery, the cylindrical battery, and the prismatic battery is used in a battery module or a battery pack, leakage of an electrolyte from the battery cell may cause various problems. Leakage of the electrolyte may degrade the electrical performance of the battery module or the battery pack, and there is a danger of corrosion, short circuit, and fire outbreak due to leaked electrolyte. For a battery module having a plurality of battery cells mounted therein, early electrolyte leakage detection is very important for safety reasons.

Patent Document 1 relates to an apparatus and method for detecting leakage of an electrolyte from a battery cell to protect a battery pack. Patent Document 1 includes an electrolyte absorbing member 10 attached to the outside of a battery cell to absorb an electrolyte having leaked from the battery cell, the electrolyte absorbing member having characteristics of a conductor as the result of absorbing the electrolyte, a power supply unit 20 connected to opposite ends of the electrolyte absorbing member to supply power thereto, a resistance unit 30 connected between the electrolyte absorbing member and the power supply unit, a sensing unit 40 configured to sense whether current flows in the resistance unit, and a controller 50 configured to melt and cut a fuse on a charging and discharging path of the battery pack to block charging and discharging current when the sensing unit senses that current flows in the resistance unit.

Patent Document 1 has the feature of detecting leakage of the electrolyte, thereby protecting a battery module or a battery pack; however, the overall structure of absorbing the electrolyte and sensing whether current flows is very complicated. In particular, the electrolyte absorption member must be attached separately to the outside of each battery cell, and there is a problem that a plurality of additional members takes up space and reduces energy density.

Patent Document 2 relates to a battery module and a battery pack including the same, wherein a film-type sensor configured to detect leakage of an electrolyte is attached to opposite sides of a slit in a busbar frame. An insulating coating layer, which is made of a material configured to melt when reacting with an organic solvent, i.e., an electrolyte, is added to the outside of the film-type sensor.

In the case of Patent Document 2, when the electrolyte leaks, the electrolyte moves to a lower end of the bus frame by gravity, whereby it is difficult to detect leakage of the electrolyte unless the electrolyte leaks in large quantities. Rather, the leaked electrolyte escapes through the slit, making early detection difficult.

In addition, electrical connection is required for each individual position at which the sensor is attached, whereby the structure for such electrical connection is complicated, and interference with a busbar may be caused due to electrical connection.

Patent Document 3 relates to an apparatus for detecting leakage of an electrolyte in a battery module/pack, wherein a wire parallel to a strip body including a wiring portion is embedded in a lower part of the battery module/pack, and a wire window is configured to cause a capillary effect to short-circuit two wires in case of leakage of an electrolyte, and a determination is made as to whether an electrolyte leaks from a battery through electrical resistance measurement.

In the case of Patent Document 3, the wiring portion configured to detect the electrolyte is embedded in a separate bottom plate, and therefore and detection is possible only when the amount of the leaked electrolyte reaches a certain amount. In Patent Document 3, it is stated that detection is possible only when the amount of the leaked electrolyte exceeds 8 ml.

It is difficult to apply a battery module or pack using a pouch-shaped battery to Patent Document 3. Since a lower surface of the pouch-shaped battery is a part that is connected without separate sealing, an electrolyte leaks from a side surface or an upper surface of the pouch-shaped battery. When the electrolyte leaks from the upper surface of the pouch-shaped battery, the electrolyte cannot flow to the bottom plate and is dried before that unless the electrolyte leaks in large quantities, since battery cells are stacked vertically, the distance therebetween is very small, and a pad may be added therebetween in some cases.

In Patent Document 3, separate embedment in the bottom plate is required, and a configuration, such as a capillary, must be added. When embedment is performed in a longitudinal direction, as in an embodiment of Patent Document 3, early detection of leakage of the electrolyte from the pouch-shaped battery is substantially impossible.

If the electrolyte leaks from opposite sides of the pouch-shaped battery, i.e., the parts of the pouch-shaped battery from which electrode tabs protrude, the electrolyte leaks to the lower end of the busbar frame, and the electrolyte must leak in significant quantities in order for the electrolyte to flow to the separate bottom plate.

Patent Document 3 mentions the case in which a strip-type detection groove is installed in the center of the bottom plate or is disposed along electrodes of the batteries in the battery module so as to be located directly under the electrodes, and also mentions the case in which a plurality of strip-type detection grooves is provided. In Patent Document 3, however, the shape of the strip-type detection groove is limited. In the case of a pouch-shaped battery, opposite electrodes must be coupled to the busbar frame, and therefore the strip-type detection groove of Patent Document 3 may be located only under the busbar frame. In this case, early detection of a very small amount of an electrolyte is impossible. Patent Document 3 also limits the minimally detectable amount of the electrolyte to more than 8 ml.

It can be seen that, in the embodiment of Patent Document 3 or when the strip-type detection groove is disposed under the electrode, early detection of leakage of the electrolyte from the pouch-shaped battery is impossible. Given that the strip-type detection groove of Patent Document 3 is described as being disposed in the longitudinal direction, being disposed directly under the electrode, or being disposed in plural, it may be assumed that the case in which a cylindrical battery cell is used is considered.

As can be seen from the above, technology that i) is capable of performing early detection of leakage of a very small amount of an electrolyte, ii) is simple in structure, and iii) is capable of being applied without interference with the configuration of a conventional device has not yet been provided.
Korean Registered Patent Publication No. 1383599 (2014.04.03) ("Patent Document 1")
Korean Patent Application Publication No. 2021-0108269 (2021.09.02) ("Patent Document 2")
Chinese Patent Application Publication No. 111337201 (2020.06.26) ("Patent Document 3")
   Art 54(3)EPC document : EP4224596 A1 ("Patent Document 4")

### [Disclosure]

### [Technical Problem]

The present invention has been made in view of the above problems, and it is an object of the present invention to provide an electrolyte leakage detection unit that i) is capable of performing early detection of leakage of a very small amount of an electrolyte, ii) is simple in structure, and iii) is capable of being applied without interference with the configuration of a conventional device and a battery module including the same.

### [Technical Solution]

In order to accomplish the above object, the present invention provides a battery module according to claim 1 including a detection unit configured to detect leakage of an electrolyte from a battery cell, wherein the battery cell is a pouch-shaped battery, and wherein the detection unit is disposed at a lower end of a perimeter of a vertical plate including a busbar configured to allow an electrode of the battery cell to be electrically coupled thereto.

The vertical plate may include a vertical support portion formed in a shape of a vertically disposed plate, an electrode groove formed in a shape of a plurality of slits provided in a part of the vertical support portion in a vertical direction, the electrode groove being configured to allow the electrode of the battery cell to extend therethrough, a busbar electrically connected to the electrode of the battery cell extending through the electrode groove, and a lower end support portion coupled to the vertical support portion along a lower perimeter thereof, the lower end support portion being formed in a shape of a horizontal band.

The detection unit may be disposed at an upper surface and/or a lower surface of the lower end support portion, and the lower end support portion may be provided with a groove configured to communicate with the detection unit when the detection unit is disposed at the lower surface of the lower end support portion.

The detection unit is configured such that two insulated conducting wires are disposed and at least a part of each of the two insulated conducting wires are exposed to an outside of the detection unit. For example, a flexible flat cable (FFC) or a flexible printed circuit (FPC) may be used; however, the present invention is not limited thereto. For space saving and ease of installation, it is preferable to use a thin or flexible wire.

Meanwhile, the detection unit is configured such that the two insulated conducting wires are exposed to the outside of the detection unit at the position at which the electrode of the battery cell is disposed. In addition, one-side ends of the two insulated conducting wires of the detection unit may be connected to each other via a resistor.

The battery module may further include a measurement unit configured to measure resistance or voltage of the detection unit.

In addition, the present invention provides a method of detecting leakage of an electrolyte from a battery cell using the battery module as defined in claim 7, wherein resistance or voltage of the detection unit is measured, and when the measured resistance or voltage deviates from a reference range, a determination is made that the electrolyte has leaked.

When the amount of the leaked electrolyte is at least 1/20 ml, leakage of the electrolyte may be detected.

The present invention may provide any possible combinations of the above solving means.

### [Advantageous Effects]

As is apparent from the above description, in the present invention, it is possible to provide an electrolyte leakage detection unit that i) is capable of performing early detection of leakage of a very small amount of an electrolyte, ii) is simple in structure, and iii) is capable of being applied without interference with the configuration of a conventional device and a battery module including the same.

Particularly, in the present invention, it is possible to immediately detect a single drop, typically 1/20 ml, of an electrolyte, and therefore it is possible to provide a highly superior effect that cannot be provided by conventional technology.

### [Description of Drawings]

FIG. 1 is an exploded perspective view of a conventional pouch-shaped battery.
FIG. 2 is an exploded perspective view schematically showing the structure of a conventional battery module.
FIG. 3 is a perspective view of a battery cell that is mounted in a battery module according to an embodiment of the present invention.
FIG. 4 shows a part where leakage of an electrolyte occurs in the battery module according to the present invention.
FIG. 5 is an inner schematic view of a vertical plate of the battery module according to the present invention.
FIG. 6 is an outer schematic view of the vertical plate of the battery module according to the present invention.
FIG. 7 is a plan schematic view of a detection unit according to a first embodiment of the present invention.
FIG. 8 is a schematic view of an FPC, which is a detection unit according to a second embodiment of the present invention.
FIG. 9 is an inner schematic view of a vertical plate of a battery module according to a third embodiment of the present invention.
FIGs. 10 and 11 show the results of measurement of resistance values based on the amount of an electrolyte.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is the to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an electrolyte leakage detection unit according to the present invention and a battery module including the same will be described with reference to the accompanying drawings.

The basic structure of the battery module according to the present invention is identical to the structure of a battery module using a conventional pouch-shaped battery. FIG. 2 is an exploded perspective view schematically showing the structure of a conventional battery module. Unlike FIG. 2, the pouch-shaped battery may be modified to have electrodes disposed in only one direction as shown in FIG. 1, and upper ends of a busbar frame 120 may not be connected to each other. Even in the case of a pouch-shaped battery having electrodes disposed in opposite directions, the shape of the busbar frame 120 is not limited to the shape shown in the figure, and the busbar frame may have any shape as long as opposite busbars are electrically connected to each other. Furthermore, a monoframe 130 and a side frame 140, which are shown as one example, may be modified into any shape as long as the monoframe and the side frame serve as an outer case configured to enclose the battery module.

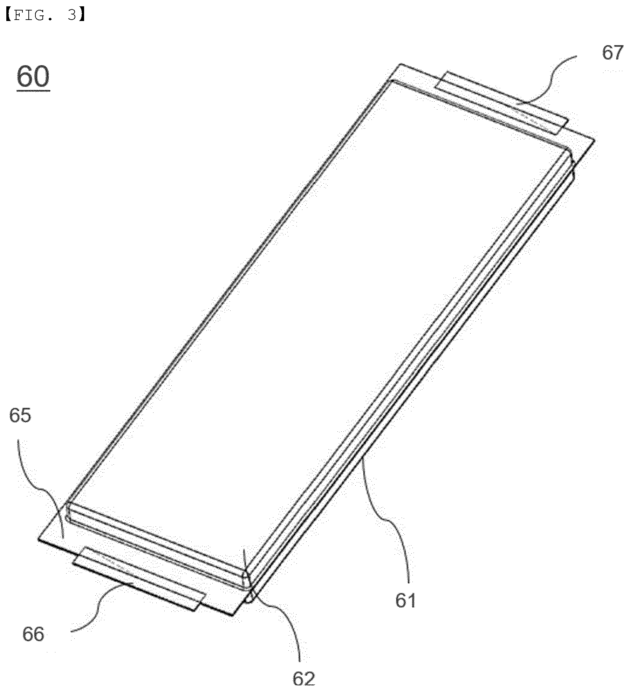

FIG. 3 is a perspective view of a battery cell that is mounted in a battery module according to an embodiment of the present invention.

As shown in FIG. 3, the pouch-shaped battery or battery cell 60 includes a cell case upper part 62, a cell case lower part 61, an electrode assembly (not shown) received in the cell case upper part and the cell case lower part, a sealed portion 65 provided at edges of the cell case upper part and the cell case lower part, a pair of electrode tabs (not shown), a pair of electrode leads constituted by a positive electrode lead 66 and a negative electrode lead 67, each of which has one side electrically connected to a corresponding one of the electrode tabs and the other side protruding outward from the cell case, and an insulating film (not shown).

Specifically, each of the cell case upper part 62 and the cell case lower part 61 is provided with a pocket-shaped space portion, in which the electrode assembly is received.

The space portion of the cell case, in which the electrode assembly is received, is formed using a laminate sheet constituted by an outer covering layer, a metal layer, and an inner covering layer.

The inner covering layer is disposed in direct contact with the electrode assembly, and therefore the inner covering layer must exhibit high insulation properties and high resistance to an electrolyte. In addition, the inner covering layer must exhibit high sealability in order to hermetically isolate the cell case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is preferably used.

The metal layer, which abuts the inner covering layer, corresponds to a barrier layer configured to prevent moisture or various kinds of gas from permeating into the battery from the outside. An aluminum thin film, which is lightweight and easily shapeable, may be used as a preferred material for the metal layer.

The outer covering layer is provided at an outer surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

The electrode assembly, which is received in the cell case upper part 62 and the cell case lower part 61, may be classified as a stacked type electrode assembly, which is configured to have a structure in which a plurality of electrodes is stacked, a jelly-roll type electrode assembly, which is configured to have a structure in which a positive electrode and a negative electrode are wound in the state in which a separator is interposed therebetween, a laminated and stacked type electrode assembly, which is configured to have a structure in which a plurality of unit cells is stacked, or a stacked and folded type electrode assembly, which is configured to have a structure in which unit cells are wound in a state of being located on a separator sheet.

A unit cell is manufactured in order to manufacture the laminated and stacked type electrode assembly or the stacked and folded type electrode assembly, wherein the unit cell may be a mono-cell, which is configured to have a structure in which a separator is interposed between a positive electrode and a negative electrode, or a bi-cell, which is configured to have a structure in which a positive electrode, a negative electrode, and a positive electrode or a negative electrode, a positive electrode, and a negative electrode are stacked and a separator is interposed between the positive electrode and the negative electrode.

The electrode assembly according to the present invention may have a structure in which a negative electrode, a separator, a positive electrode, a separator, and a negative electrode are stacked, and the number of positive electrodes or negative electrodes constituting the electrode assembly may be freely changed. In addition, a laminated and stacked type electrode assembly, in which a plurality of unit cells is laminated, may be used. The structure of the electrode assembly described above may be applied to all electrode assemblies described in this specification.

A positive electrode tab and a negative electrode tab are provided respectively at the positive electrode and the negative electrode of the electrode assembly, and the pair of electrode tabs is disposed so as to protrude a predetermined length outward from the cell case in a state of being connected respectively to a positive electrode lead 66 and a negative electrode lead 67 by spot welding, etc.

The insulating film is located at an upper surface and a lower surface of each of the pair of electrode leads, more specifically at the sealed portion 65, at which the cell case upper part 62 and the cell case lower part 61 are thermally fused to each other. The insulating film prevents electricity generated by the electrode assembly from flowing to the cell case via the electrode leads and maintains a sealed state between the electrode leads and the cell case. The insulating film is preferably made of a non-conductive material that does not conduct electricity well, and an insulating tape easy to attach to the electrode leads while having a relatively small thickness is generally used; however, the present invention is not limited thereto.

Although the battery cell is shown as a bidirectional battery cell having a positive electrode lead 66 and a negative electrode lead 67 located at opposite ends thereof in the figure, the present invention may also be applied to a unidirectional battery cell having a pair of electrode leads disposed so as to face in the same direction.

During use of the battery module, separation of the thermally fused sealed portion of the pouch-shaped battery may occur due to repeated charging and discharging, i.e., the thermally fused portion may be deteriorated due to expansion pressure caused by gas generated by irreversible reaction or due to repetition of the conditions using high current such as rapid charging, whereby an electrolyte may leak from the pouch-shaped battery.

In addition, the electrolyte may leak due to a variety of reasons, such as tear of the case by external impact or chemical corrosion.

Since a lower surface of the pouch-shaped battery, which is vertically disposed in the battery module, is a part that is connected without separate sealing, the electrolyte leaks from a side surface or an upper surface of the pouch-shaped battery. When the electrolyte leaks from the upper surface of the pouch-shaped battery, the electrolyte cannot flow to the bottom plate and is dried before that unless the electrolyte leaks from the upper surface of the pouch-shaped battery in large quantities, since the battery cells are stacked vertically, the distance therebetween is very small, and a pad may be added therebetween in some cases.

If the electrolyte leaks from opposite sides of the pouch-shaped battery, i.e., the parts of the pouch-shaped battery from which the electrode tabs protrude, the electrolyte leaks to a lower end of a busbar frame, and the electrolyte must leak in significant quantities in order for the electrolyte to flow to the separate bottom plate.

Both an aqueous electrolyte and a non-aqueous electrolyte may be used as the electrolyte according to the present invention as long as the electrolyte can be used in a secondary battery. The non-aqueous electrolyte containing lithium salt may be composed of an electrolyte and lithium salt, and a non-aqueous organic solvent, an organic solid electrolyte, or an inorganic solid electrolyte is used as the electrolyte.

For example, a non-protic organic solvent, such as N-methyl-2-pyrollidinone, propylene carbonate (PC), ethylene carbonate (EC), butylene carbonate, dimethyl carbonate (DMC), diethyl carbonate (DEC), gamma-butyrolactone, 1,2-dimethoxy ethane, tetrahydroxy franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, or ethyl propionate, may be used as the non-aqueous organic solvent.

For example, a polyethylene derivative, a polyethylene oxide derivative, a polypropylene oxide derivative, a phosphoric acid ester polymer, poly agitation lysine, polyester sulfide, polyvinyl alcohol, polyvinylidene fluoride, or a polymer containing an ionic dissociation group may be used as the organic solid electrolyte.

For example, a nitride, halide, or a sulfate of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, or Li₃PO₄-Li₂S-SiS₂, may be used as the inorganic solid electrolyte.

The lithium salt is a material that is readily soluble in the non-aqueous electrolyte. For example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, , chloroborane lithium, lower aliphatic carboxylic acid lithium, lithium 4-phenyl borate, or imide may be used as the lithium salt.

In addition, in order to improve charge and discharge characteristics and flame retardancy, for example, pyridine, triethylphosphite, triethanolamine, cyclic ether, ethylenediamine, n-glyme, hexaphosphoric triamide, a nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, or the like may be added to the electrolyte. Depending on circumstances, in order to impart incombustibility thereto, the electrolyte may further include a halogen-containing solvent, such as carbon tetrachloride or ethylene trifluoride. Furthermore, in order to improve the high-temperature retention characteristics thereof, the electrolyte may further include carbon dioxide gas. Moreover, fluoro-ethylene carbonate (FEC) and propene sultone (PRS) may be further included.

A lithium salt, such as LiPF₆, LiClO₄, LiBF₄, or LiN(SO₂CF₃)₂, may be added to a mixed solvent of cyclic carbonate, such as EC or PC, which is a high dielectric solvent, and linear carbonate, such as DEC, DMC, or ethyl methyl carbonate (EMC), which is a low viscosity solvent, to manufacture a non-aqueous electrolyte containing a lithium salt.

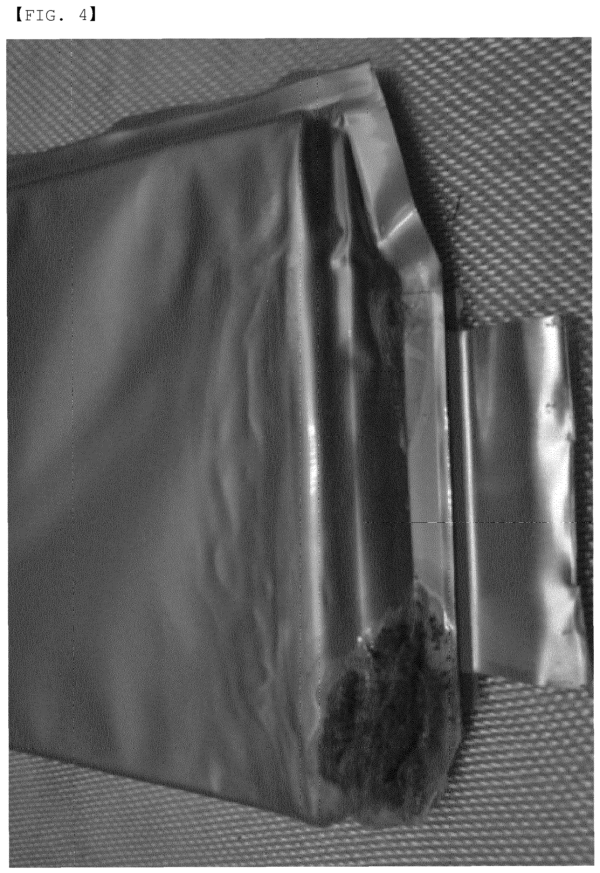

FIG. 4 shows a part where leakage of an electrolyte occurs in the battery module according to the present invention. Referring to FIG. 4, it can be clearly seen that, in the case of a pouch-shaped battery, the leakage part is a side sealed portion.

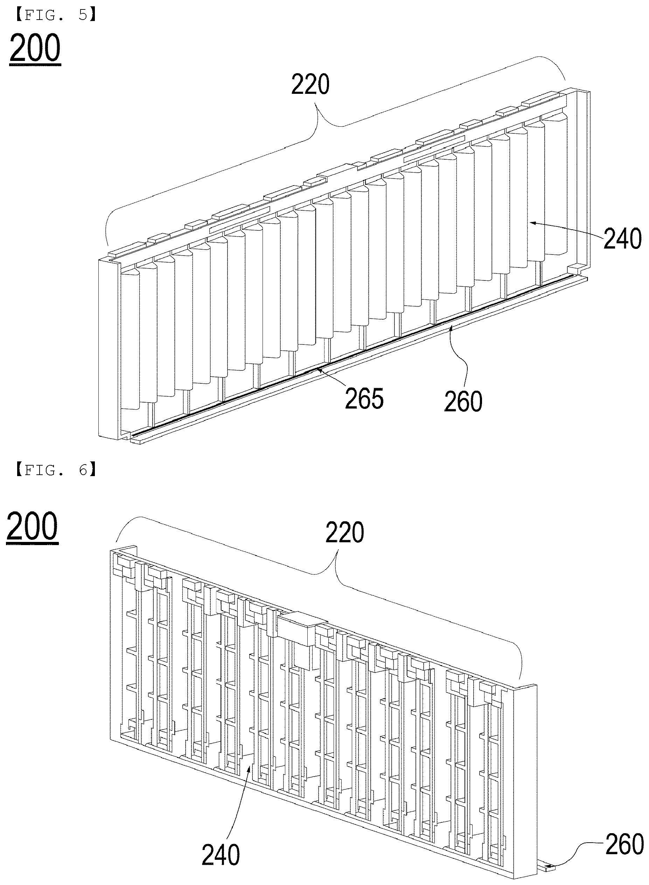

FIG. 5 is an inner schematic view of a vertical plate of the battery module according to the present invention, and FIG. 6 is an outer schematic view of the vertical plate of the battery module according to the present invention.

Referring to FIGs. 5 and 6, the vertical plate 200 is disposed at each of left and right sides of the battery cell assembly of the battery module. A circuit part including a busbar for electrical connection is omitted from the vertical plate 200 of FIGs. 5 and 6.

The vertical plate 200 may include a vertical support portion 220 formed in the shape of a vertically disposed plate, an electrode groove 240 formed in the shape of a plurality of slits provided in a part of the vertical support portion 220 in a vertical direction, the electrode groove being configured to allow electrodes of battery cells to extend therethrough, a busbar (not shown, omitted) electrically connected to the electrodes of the battery cells extending through the electrode groove 240, and a lower end support portion 260 coupled to the vertical support portion 220 along a lower perimeter thereof, the lower end support portion being formed in the shape of a horizontal band.

A detection unit 265 according to the present invention is disposed at an upper surface and/or a lower surface of the lower end support portion 260. In FIG. 5, the detection unit 265 is simplified and shown only as a black line. The detection unit 265 may further extend along a side surface of the vertical support portion 220 or may be separately disposed along the side surface of the vertical support portion, and the detection unit may be electrically coupled to a measurement unit configured to measure the resistance or voltage of the detection unit 265. The measurement unit may be included in a BMS of the battery module.

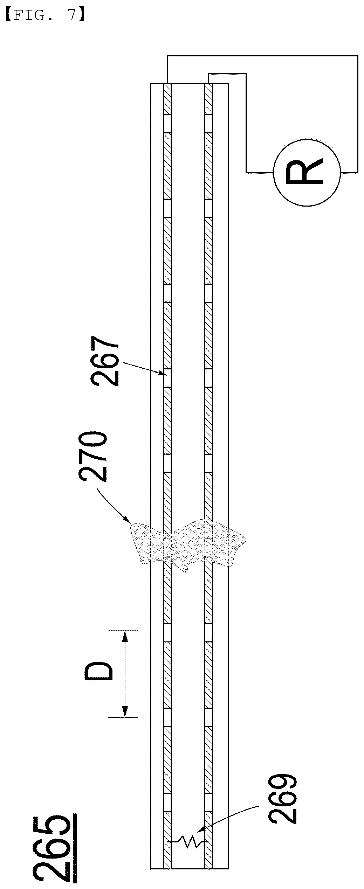

FIG. 7 is a plan schematic view of a detection unit 265 according to a first embodiment of the present invention. In the detection unit 265, two insulated conducting wires are disposed, and at least a part of each of the two insulated conducting wires constitutes an exposure portion 267 that is exposed to the outside.

The exposure portions 267 of the detection unit 265 may be disposed at positions at which the electrodes of the battery cells are disposed. In FIG. 7, the distance between the exposure portions 267 is indicated by D. Pouch-shaped battery cells have the same or similar thicknesses. When the pouch-shaped battery cells are stacked in a horizontal direction in a state of being vertically erected, therefore, the distances between the pouch-shaped battery cells may be the same, and therefore the distance D between the exposure portions 267 may also be the same.

One-side ends of the two insulated conducting wires of the detection unit 265 may be connected to each other via a resistor 269. A measurement unit R configured to measure the resistance or voltage of the entirety of the detection unit may be added to the other ends of the detection unit.

The resistance of the conducting wire is very low. If there is no electrolyte leakage, therefore, the resistance of the detection unit 265 represents the resistance value of the resistor 269. When the resistor 269 is not connected and the conducting wire is also not connected, the resistance is infinite.

When an electrolyte 270 leaks and falls between the exposure portions 267 of the two insulated conducting wires, as shown in FIG. 7, the resistance is reduced in proportion to connection due to the electrolyte. When the resistor 269 is connected or the conducting wires are not connected, the reduction in resistance due to leakage of the electrolyte is very large, and therefore the resistance due to the electrolyte is substantially measured.

When connection due to the electrolyte increases, parallel connection increases in proportion thereto, whereby resistance is further reduced. The resistance reduced by the electrolyte is equal to the resistance reduced by the parallel connection, which is the value obtained by adding all the reciprocals of the resistance and taking the reciprocal thereof.

When the detection unit 265 is manufactured using a flexible flat cable (FFC) or a flexible printed circuit (FPC), the detection unit has the advantage of being not only thin but also flexible.

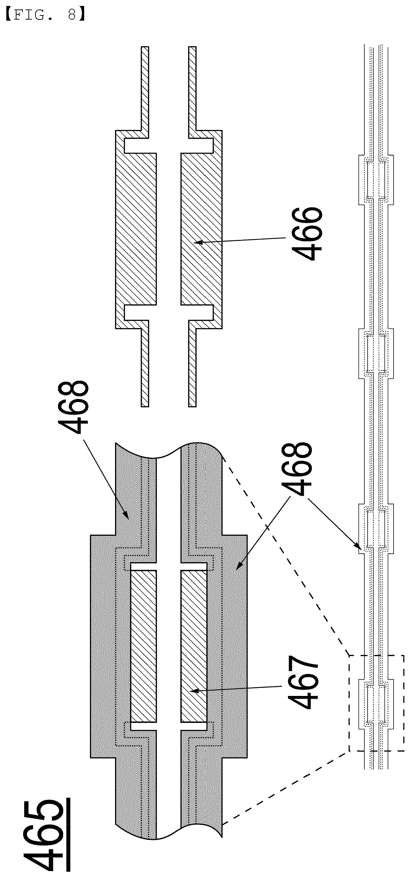

FIG. 8 is a schematic view of an FPC, which is a detection unit 465 according to a second embodiment of the present invention. FIG. 8 is a schematic view of an upper surface of a detection unit 465 having an exposure portion 467. FIGs. 7 and 8 show an example of the detection unit, wherein two insulated conducting wires are disposed and at least a part of each of the two insulated conducting wires constitutes an exposure portion configured to be exposed to the outside. The detection unit may be modified into various shapes.

The detection unit 465 is repeatedly provided with an exposure portion 467 configured to be exposed to the outside. A thin film copper pattern 466 is repeatedly connected and disposed, as shown in a right upper end of FIG. 8, and a part thereof is exposed to the outside to constitute an exposure portion 467. The thin film copper pattern 466 is insulated by an FPC cover layer 468, which is made of an insulating material, except for the exposure portion 467.

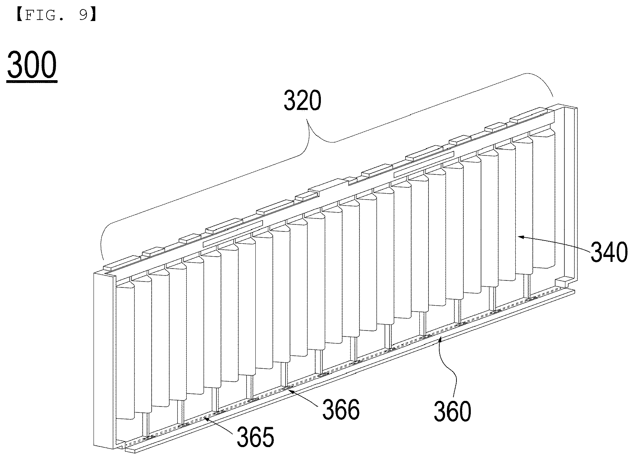

FIG. 9 is an inner schematic view of a vertical plate of a battery module according to a third embodiment of the present invention. The vertical plate 300 may include a vertical support portion 320 formed in the shape of a vertically disposed plate, an electrode groove 340 formed in the shape of a plurality of slits provided in a part of the vertical support portion 320 in a vertical direction, the electrode groove being configured to allow electrodes of battery cells to extend therethrough, a busbar (not shown, omitted) electrically connected to the electrodes of the battery cells extending through the electrode groove 340, and a lower end support portion 360 coupled to the vertical support portion 320 along a lower perimeter thereof, the lower end support portion being formed in the shape of a horizontal band.

A detection unit 365 according to the present invention may be disposed at a lower surface of the lower end support portion 360. In FIG. 9, the detection unit 365 is shown as a dotted line, since the detection unit is located at the lower surface of the lower end support portion 360. The detection unit 365 may further extend along a side surface of the vertical support portion 320 or may be separately disposed along the side surface of the vertical support portion, and the detection unit may be electrically coupled to a measurement unit configured to measure the resistance or voltage of the detection unit 365. The measurement unit may be included in a BMS of the battery module.

The lower end support portion 360 may be provided with a groove 366 configured to communicate with the detection unit 365 when the detection unit 365 is disposed at the lower surface of the lower end support portion 360. The groove 366 is preferably located at the position at which electrodes of pouch-shaped batteries are disposed. The section of the groove 366, which is formed through the lower end support portion 360 and communicates with the detection unit 365, may be the same size at the top and bottom, or larger or smaller from the top to the bottom.

In addition, the present invention provides a method of detecting leakage of an electrolyte from a battery cell using a battery module, wherein the resistance or voltage of a detection unit is measured, and when the measured resistance or voltage deviates from a reference range, a determination is made that the electrolyte has leaked.

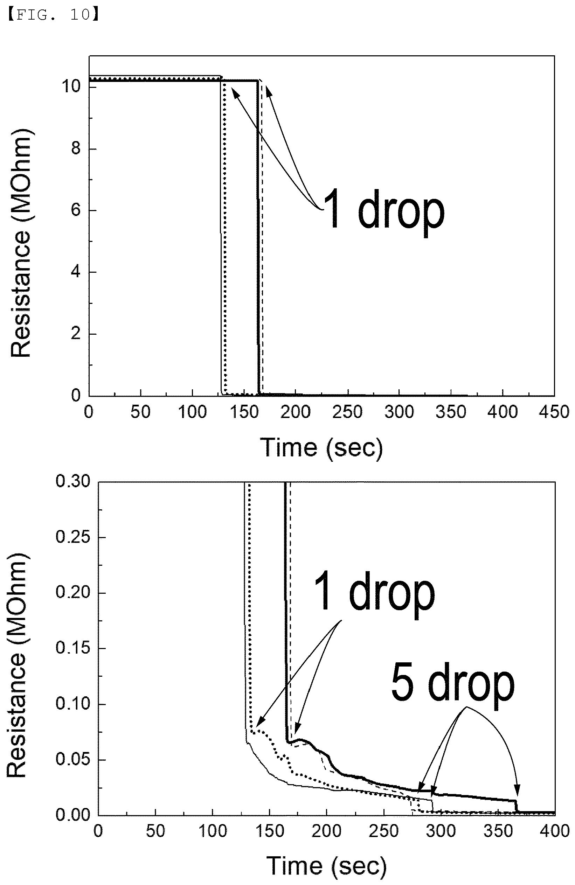

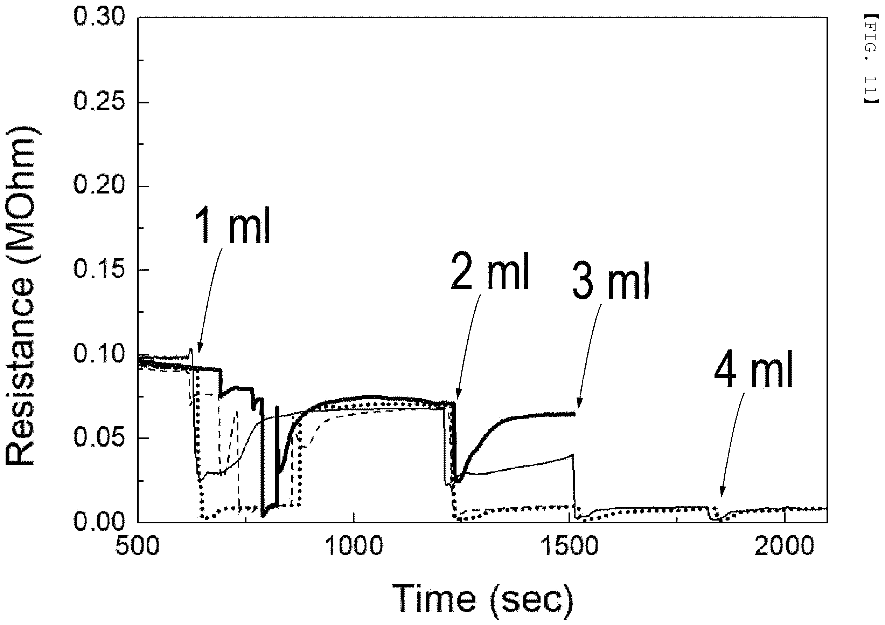

FIGs. 10 and 11 show the results of measurement of resistance values based on the amount of an electrolyte.

### <Experiment 1>

The resistance due to electrolyte exposure was measured using the detection unit according to the second embodiment of FIG. 8. A cover layer of the FPC is made of polyimide (PI) or polyethylene naphthalate (PEN). The detection unit was provided with five exposure portions. The electrolyte used includes EC, a highly conductive solvent, EMC, a low viscosity solvent, and an additional additive.

In FIGs. 10 and 11, left two data, i.e., a thin solid line and a thick dotted line, are for a polyimide cover layer, and right two data, i.e., a thick solid line and a thin dotted line, are for a polyethylene naphthalate cover layer. The y-axis is the measured resistance in MOhm, and the x-axis is the time in seconds. For data observation, experiments were conducted with a slight time difference for each.

The upper graph of FIG. 10 shows that, before exposure to the electrolyte, the resistance remains at about 10 MOhm. The lower graph of FIG. 10 shows that, when a drop (about 1/20 ml) of the electrolyte fell to one exposure portion 467, the resistance was instantaneously reduced to 0.07 MΩ or less. It can be seen that, when a drop (about 1/20 ml) of the electrolyte sequentially fell to all of the five exposure portions, the resistance was sequentially reduced and finally reduced to 0.03 MOhm or less.

It can be seen that the detection unit according to the present invention is very sensitive and is capable of detecting a small amount of an electrolyte, and it can be seen that the detection unit is also capable of quantitatively determining the amount of leakage even if the amount of leakage is a small amount.

### <Experiment 2>

It can be seen that, when the resistance was measured after a detection unit having five exposure portions was submerged in about 250 ml of tap water (immersion), as in Experiment 1, the resistance was reduced to 0.1 MΩ (x-axis time of 500 seconds in FIG. 11). A thin solid line, a thick dotted line, a thick solid line, and a thin dotted line are the same as in FIG. 10. 1 ml of an electrolyte, which corresponded to about 20 drops of the electrolyte, was further dropped. Even in this case, it can be seen that all of the resistances were reduced to 0.03 MOhm or less (see time from 600 to 900 seconds in FIG. 11). After 10 minutes, all of the resistances increased to 0.07 MOhm or more (see time of 1200 seconds in FIG. 11). 1 ml of the electrolyte was added over time such that the total amount of the electrolyte dropped was 2 ml, 3 ml, and 4 ml. The resistance decreased as the total amount increased to 2 ml, 3 ml, and 4 ml. When the amount of electrolyte leakage was 4 ml or more, the resistance did not increase over a long period of time.

It can be seen from Experiment 1 and Experiment 2 that the detection unit according to the present invention has an excellent effect of being capable of clearly detecting leakage of an electrolyte even when the amount of the leaked electrolyte is very small. In addition, the amount of leakage is quantitatively distinguishable. Meanwhile, when the detection unit is immersed in water, it is also possible to determine whether the problem is caused by the water or the electrolyte.

From the above experiments, it can be seen that the present invention is capable of not only immediately detecting a very small amount of an electrolyte but also distinguishing and identifying leakage in various places.

### (Description of Reference Symbols)

10: Battery case
11, 61: Lower parts
12, 62: Upper parts
13: Receiving portion
20: Electrode assembly
21, 22: Electrode tabs
31, 32, 66, 67: Electrode leads
41, 42: Insulating films
50, 60: Pouch-shaped batteries
65: Sealed portion
100: Battery module
110: Cell assembly
111: Pouch-shaped battery
112: Electrode lead
120: Busbar frame
121, 122, 200: Vertical plates
123: Upper plate
126: Busbar
130: Monoframe
140: Side frame
200, 300: Vertical plates
220, 320: Vertical support portion
240, 340: Electrode groove
260, 360: Lower end support portion
265, 365, 465: Detection unit
366: Groove
466: Thin film copper pattern
267, 467: Exposure portions
468: FPC cover layer
269: Resistor
270: Electrolyte
D: Distance between exposure portions
R: Measurement unit

## Claims

1. A battery module (100) comprising a detection unit (265, 365, 465) configured to detect leakage of an electrolyte from a battery cell,
wherein the battery cell is a pouch-shaped battery (111), and
**characterised in that** the detection unit (265, 365, 465) is disposed at a lower end of a perimeter of a vertical plate (121, 122, 200) comprising a busbar (126) configured to allow an electrode of the battery cell to be electrically coupled thereto,
**in that** the detection unit (265, 365, 465) is configured such that two insulated conducting wires are disposed and at least a part (267) of
each of the two insulated conducting wires are exposed to an outside of the detection unit,
**in that** the detection unit (265, 365, 465) is configured such that the two insulated conducting wires are exposed to the outside of the detection unit at a position at which the electrode of the battery cell is disposed, and
**in that** the battery module (100) further comprises a measurement unit (R) configured to measure resistance or voltage of the detection unit (265, 365, 465).

2. The battery module (100) according to claim 1, wherein the vertical plate (121, 122, 200) comprises:
a vertical support portion (220, 320) formed in a shape of a vertically disposed plate;
an electrode groove (240, 340) formed in a shape of a plurality of slits provided in a part of the vertical support portion in a vertical direction, the electrode groove being configured to allow the electrode of the battery cell to extend therethrough;
a busbar (126) electrically connected to the electrode of the battery cell extending through the electrode groove (240, 340); and
a lower end support portion coupled to the vertical support portion along a lower perimeter thereof, the lower end support portion being formed in a shape of a horizontal band.

3. The battery module according to claim 2, wherein the detection unit (265, 365, 465) is disposed at an upper surface and/or a lower surface of the lower end support portion (260, 360).

4. The battery module (100) according to claim 3, wherein the lower end support portion (260, 360) is provided with a groove (366) configured to communicate with the detection unit (265, 365, 465) when the detection unit (265, 365, 465) is disposed at the lower surface of the lower end support portion.

5. The battery module (100) according to claim 4, wherein the detection unit (265, 365, 465) comprises a flexible flat cable (FFC) or a flexible printed circuit (FPC).

6. The battery module (100) according to claim 1, wherein one-side ends of two insulated conducting wires of the detection unit (265, 365, 465) are connected to each other via a resistor (269).

7. A method of detecting leakage of an electrolyte from a battery cell using the battery module (100) according to any one of claims 1 to 6, wherein resistance or voltage of the detection unit (265, 365, 465) is measured, and when the measured resistance or voltage deviates from a reference range, a determination is made that the electrolyte has leaked.

## Patentansprüche

1. Batteriemodul (100), umfassend eine Detektionseinheit (265, 365, 465), die so konfiguriert ist, dass sie eine Leckage eines Elektrolyten aus einer Batteriezelle detektiert,
wobei die Batteriezelle eine beutelförmige Batterie (111) ist, und
**dadurch gekennzeichnet, dass** die Detektionseinheit (265, 365, 465) an einem unteren Ende eines Umfangs einer vertikalen Platte (121, 122, 200) angeordnet ist, die eine Stromschiene (126) umfasst, welche so konfiguriert ist, dass sie es einer Elektrode der Batteriezelle ermöglicht, elektrisch daran gekoppelt zu sein,
dass die Detektionseinheit (265, 365, 465) so konfiguriert ist, dass zwei isolierte Leitungsdrähte angeordnet sind und mindestens ein Teil (267) jedes der zwei isolierten Leitungsdrähte zu einer Außenseite der Detektionseinheit hin freiliegt,
dass die Detektionseinheit (265, 365, 465) so konfiguriert ist, dass die zwei isolierten Leitungsdrähte an einer Position, an der die Elektrode der Batteriezelle angeordnet ist, zur Außenseite der Detektionseinheit hin freiliegen, und
dass das Batteriemodul (100) ferner eine Messeinheit (R) umfasst, die so konfiguriert ist, dass sie einen Widerstand oder eine Spannung der Detektionseinheit (265, 365, 465) misst.

2. Batteriemodul (100) nach Anspruch 1, wobei die vertikale Platte (121, 122, 200) Folgendes umfasst:
• einen vertikalen Stützabschnitt (220, 320), der in Form einer vertikal angeordneten Platte ausgebildet ist;
• eine Elektrodennut (240, 340), die in Form einer Vielzahl von Schlitzen ausgebildet ist, die in einem Teil des vertikalen Stützabschnitts in einer vertikalen Richtung vorgesehen sind, wobei die Elektrodennut so konfiguriert ist, dass sie es der Elektrode der Batteriezelle ermöglicht, sich dort hindurch zu erstrecken;
• eine Stromschiene (126), die mit der sich durch die Elektrodennut (240, 340) erstreckenden Elektrode der Batteriezelle elektrisch verbunden ist; und
• einen unteren Endstützabschnitt, der an den vertikalen Stützabschnitt entlang eines unteren Umfangs desselben gekoppelt ist, wobei der untere Endstützabschnitt in Form eines horizontalen Bandes ausgebildet ist.

3. Batteriemodul nach Anspruch 2, wobei die Detektionseinheit (265, 365, 465) an einer Oberseite und/oder einer Unterseite des unteren Endstützabschnitts (260, 360) angeordnet ist.

4. Batteriemodul (100) nach Anspruch 3, wobei der untere Endstützabschnitt (260, 360) mit einer Nut (366) versehen ist, die so konfiguriert ist, dass sie mit der Detektionseinheit (265, 365, 465) in Verbindung steht, wenn die Detektionseinheit (265, 365, 465) an der Unterseite des unteren Endstützabschnitts angeordnet ist.

5. Batteriemodul (100) nach Anspruch 4, wobei die Detektionseinheit (265, 365, 465) ein flexibles Flachbandkabel (FFC) oder eine flexible gedruckte Schaltung (FPC) umfasst.

6. Batteriemodul (100) nach Anspruch 1, wobei einseitige Enden von zwei isolierten Leitungsdrähten der Detektionseinheit (265, 365, 465) über einen Widerstand (269) miteinander verbunden sind.

7. Verfahren zum Detektieren einer Leckage eines Elektrolyten aus einer Batteriezelle unter Verwendung des Batteriemoduls (100) nach einem der Ansprüche 1 bis 6, wobei ein Widerstand oder eine Spannung der Detektionseinheit (265, 365, 465) gemessen wird, und wenn der gemessene Widerstand oder die gemessene Spannung von einem Referenzbereich abweicht, bestimmt wird, dass der Elektrolyt ausgelaufen ist.

## Revendications

1. Module de batterie (100) comprenant une unité de détection (265, 365, 465) configurée pour détecter une fuite d'un électrolyte depuis une cellule de batterie,
dans lequel la cellule de batterie est une batterie de type poche (111), et
**caractérisé en ce que** l'unité de détection (265, 365, 465) est disposée au niveau d'une extrémité inférieure d'un périmètre d'une plaque verticale (121, 122, 200) comprenant une barre omnibus (126) configurée pour permettre à une électrode de la cellule de batterie d'y être couplée électriquement,
**en ce que** l'unité de détection (265, 365, 465) est configurée de sorte que deux fils conducteurs isolés sont disposés et qu'au moins une partie (267) de chacun des deux fils conducteurs isolés est exposée vers un extérieur de l'unité de détection,
**en ce que** l'unité de détection (265, 365, 465) est configurée de sorte que les deux fils conducteurs isolés sont exposés vers l'extérieur de l'unité de détection au niveau d'une position dans laquelle l'électrode de la cellule de batterie est disposée, et
**en ce que** le module de batterie (100) comprend en outre une unité de mesure (R) configurée pour mesurer la résistance ou la tension de l'unité de détection (265, 365, 465).

2. Module de batterie (100) selon la revendication 1, dans lequel la plaque verticale (121, 122, 200) comprend :
• une portion de support verticale (220, 320) configurée sous la forme d'une plaque disposée verticalement ;
• une rainure d'électrode (240, 340) configurée sous la forme d'une pluralité de fentes ménagées dans une partie de la portion de support verticale dans une direction verticale, la rainure d'électrode étant configurée pour permettre à l'électrode de la cellule de batterie de s'étendre à travers celle-ci ;
• une barre omnibus (126) connectée électriquement à l'électrode de la cellule de batterie s'étendant à travers la rainure d'électrode (240, 340) ; et
• une portion de support d'extrémité inférieure couplée à la portion de support verticale le long d'un périmètre inférieur de celle-ci, la portion de support d'extrémité inférieure étant configurée sous la forme d'une bande horizontale.

3. Module de batterie selon la revendication 2, dans lequel l'unité de détection (265, 365, 465) est disposée au niveau d'une surface supérieure et/ou d'une surface inférieure de la portion de support d'extrémité inférieure (260, 360).

4. Module de batterie (100) selon la revendication 3, dans lequel la portion de support d'extrémité inférieure (260, 360) est pourvue d'une rainure (366) configurée pour communiquer avec l'unité de détection (265, 365, 465) lorsque l'unité de détection (265, 365, 465) est disposée au niveau de la surface inférieure de la portion de support d'extrémité inférieure.

5. Module de batterie (100) selon la revendication 4, dans lequel l'unité de détection (265, 365, 465) comprend un câble plat flexible (FFC) ou un circuit imprimé flexible (FPC).

6. Module de batterie (100) selon la revendication 1, dans lequel des extrémités d'un seul côté de deux fils conducteurs isolés de l'unité de détection (265, 365, 465) sont connectées l'une à l'autre via une résistance (269).

7. Procédé de détection d'une fuite d'un électrolyte depuis une cellule de batterie en utilisant le module de batterie (100) selon l'une quelconque des revendications 1 à 6, dans lequel la résistance ou la tension de l'unité de détection (265, 365, 465) est mesurée, et lorsque la résistance ou la tension mesurée s'écarte d'une plage de référence, il est déterminé que l'électrolyte a fui.
